# EUROPEAN PATENT SPECIFICATION

(11) **EP 1 475 022 B1**
(45) Date of publication and mention of the grant of the patent: **28.12.2005**
(21) Application number: 04251519.7
(22) Date of filing: 17.03.2004
(51) Int. Cl.: A47J 37/00, A47J 43/00, A21B 7/00

(54) **Bread maker and control method thereof**
Brotbackmaschine und Steuerverfahren dafür
Machine de fabrication de pain procédé de commande associé

(30) Priority: 07.05.2003 KR 2003029063
(43) Date of publication of application: 10.11.2004
(73) Proprietor: SAMSUNG ELECTRONICS CO., LTD., Suwon-si, Gyeonggi-do (KR)
(72) Inventor: Lee, Jang-woo, Suwon-city, Kyungki-do (KR); Kwon, Yong-hyun, Suwon-city, Kyungki-do (KR); Kim, Chul, Anyany city, Kyungki-do (KR); Lee, Tae-uk, Suwon city, Kyungki-do (KR); Sung, Han-jun, Paldal-ku, Suwon city, Kyungki-do (KR); Lim, Dong-bin, Paldal-ku, Suwon city, Kyungki-do (KR); Park, Jae-ryong, Paldal-ku, Suwon city, Kyungki-do (KR)
(74) Representative: Brandon, Paul Laurence

(56) References cited:
- US-A- 4 803 086
- US-A- 5 146 840
- US-A- 5 832 814
- US-A- 5 947 009

## Description

The present invention relates to bread makers which automatically make bread and control methods thereof.

Generally, making bread is so complicated that it is difficult for average persons to make good bread at home by hand. This is because the process of making bread includes multiple operations of mixing ingredients such as flour, sugar, yeast, etc., to form a dough; kneading the dough; leavening the dough; baking the dough; and so on.

Therefore, various bread makers have been developed to allow a user to easily make bread by automatically performing the foregoing multiple operations to provide finished bread to the user.

For example, a bread maker disclosed in Korean Patent Publication No. 1991-10203 includes a pair of parallel kneading drums at upper and lower parts of an oven compartment that reverse rotary direction periodically, a baking tray between the pair of kneading drums, a heater to heat the inside of the oven compartment, a bar code scanner, etc.

In the bread maker according to Korean Patent Publication No. 1991-10203, upper and lower ends of a mixing bag filled with flour, water, etc., are attached to the upper and lower kneading drums, and then the mixing bag is reciprocated up and down for a predetermined period of time, thereby kneading the dough in the mixing bag.

Document US-4 803 086 discloses the preamble of claim 1.

After completing the kneading of the dough, the mixing bag is automatically separated from the upper kneading drum, and is completely wound on the lower kneading drum, with the dough being squeezed out of the mixing bag into the baking tray. Thereafter, the heater heats the inside of the oven compartment, thereby leavening and baking the dough over a predetermined period of time.

The process of making the bread depends on reading a bar code that is printed on the mixing bag. The bar code contains information on kneading time, leavening time, baking time, etc., according to a specific recipe. The bar code is read by a bar code scanner and the read data are transmitted to a controller that controls the kneading drums, the heater, etc., on the basis of the read data.

However, making the bread may need to be canceled during the bread making process owing to the user abruptly leaving the premises.

In this case, according to a conventional bread maker, if the bread making is canceled by a user's selection during the bread making process, in particular, during a kneading process, the bread making information of a controller is initialized and parts of the conventional bread maker such as a kneading drum are stopped at a time when the bread making is cancelled. Thus, it is difficult to remove the mixing bag wound on the kneading drum.

For example, when the bread making process is cancelled during the kneading process, a user has to rotate upper and lower kneading drums clockwise or counterclockwise with his/her own hands until the mixing bag is removed. When the bread making process is cancelled after the kneading process is completed, a user has to pull the mixing bag and rotate the lower kneading drum to remove the mixing bag wound on the lower kneading drum.

An aim of preferred embodiments of the present invention is to provide a bread maker and a control method thereof, in which a mixing bag is easily removed when bread making is cancelled.

According to the present invention, a bread maker comprises a main body forming an oven compartment; upper and lower kneading drums spaced apart from each other inside the oven compartment, each kneading drum having a holding part for holding opposite ends of a mixing bag filled with dough; a drum driving part suitable to rotate the kneading drums in clockwise and counterclockwise directions to knead the dough contained in the mixing bag; a cancel button suitable to select cancellation of a bread making process; a rotation sensing part suitable to sense rotation positions of the kneading drums; and a controller which is suitable to control the drum driving part so that the drum driving part rotates the kneading drums to remove the mixing bag from the holding part of the lower kneading drum on the basis of rotation position signals of the pair of kneading drums detected by the rotation sensing part and canceling information of the bread making process from the cancel button.

Suitably, the controller is suitable to control number of rotation times of the kneading drums on the basis of the rotation position sensed by the rotation sensing part.

Suitably, the controller is suitable to control the drum driving part so that the upper kneading drum is rotated opposite to a wound direction of the mixing bag on the upper kneading drum after the mixing bag is removed from the lower kneading drum.

Suitably, the controller is suitable to control the number of rotation times of the kneading drums so that the upper kneading drum is rotated to a position in which the mixing bag was first held.

Suitably, the bread maker further comprises a bar code scanners suitable to read a bar code which is stored with bread making information such as a kneading time, a baking time and so on, and attached on the mixing bag, wherein the controller removes the bread making information which is read by the bar code scanner to be stored in a memory from the memory.

According to the present invention, a method of controlling a bread maker having an oven compartment, a pair of kneading drums spaced apart from each other inside the oven compartment with each kneading drum having a holding part for holding opposite ends of a mixing bag filled with dough, and a drum driving part rotating the kneading drums to knead the dough contained in the mixing bag, comprises detecting rotation positions of the kneading drums when the bread making process is cancelled; rotating the kneading drums so that the mixing bag is removed from the holding part of the lower kneading drum on the basis of the detected rotation positions of the kneading drums and the cancelling of the bread making process.

Suitably, the method further comprises rotating the upper kneading drum opposite to a wound direction of the mixing bag on the upper kneading drum after the mixing bag is removed from the lower kneading drum.

Suitably, the rotating the upper kneading drum comprises controlling number of rotation times of the kneading drums so that the upper kneading drum is rotated to a position in which the mixing bag was first held.

Suitably, the method further comprises providing a bar code scanner for reading a bar code which is stored with bread making information such as a kneading time, a baking time and so on and attached on the mixing bag, and removing the bread making information, which is read by the bar code scanner and stored in a memory, from the memory.

Further features of the present invention are set out in the appended claims.

The present invention will become apparent and more readily appreciated from the following description of the embodiments, by way of example only, taken in conjunction with the accompanying drawings of which:
Figure 1 is a perspective view of a bread maker according to an embodiment of the present invention;
Figure 2 is a cut-away perspective view of an electric component compartment of the bread maker in FIG. 1;
Figure 3 is a control block of the bread maker in FIG. 1; and
Figure 4 is a control flowchart of the bread maker according to another embodiment of the present invention.
Figure 5 is a view of a mixing bag for use with the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

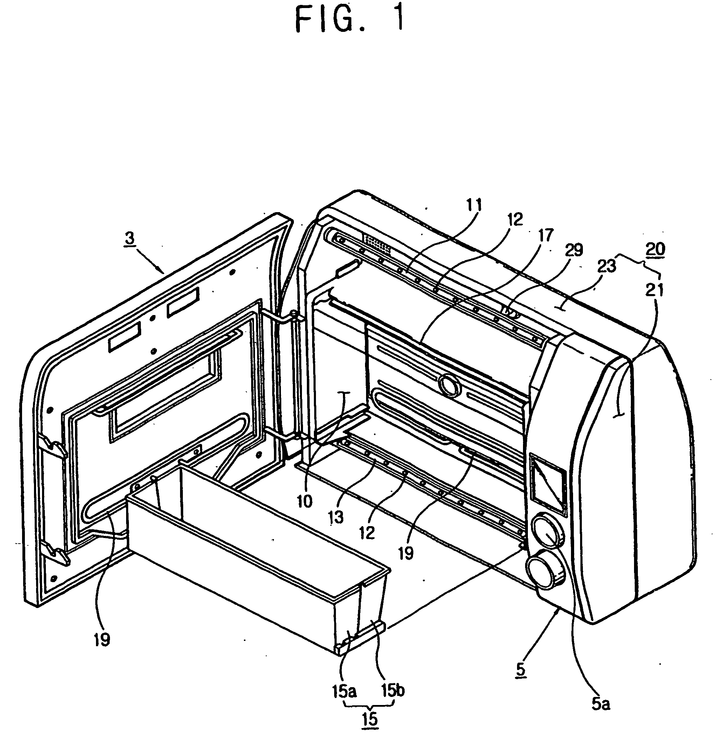

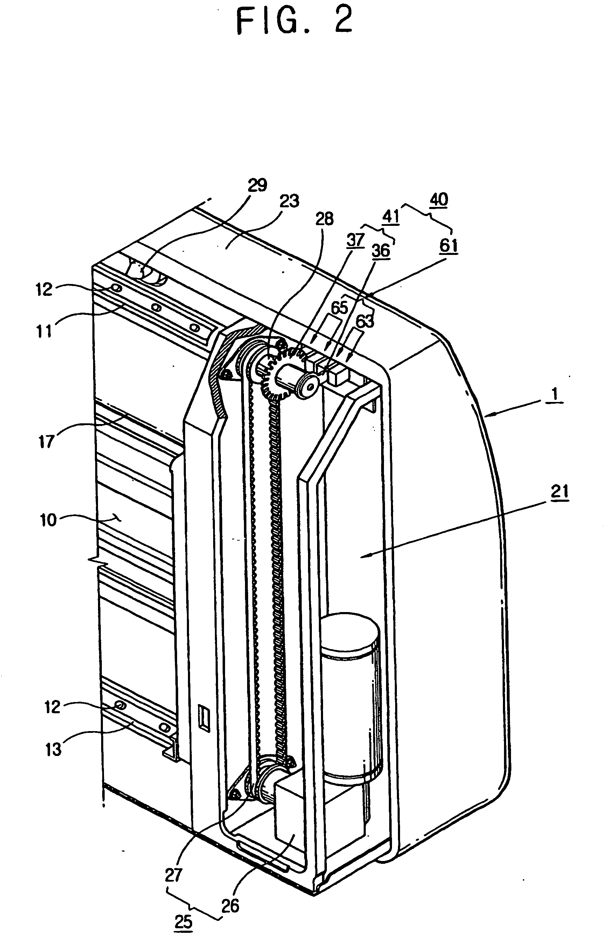

Figure 1 is a perspective view of a bread maker according to an embodiment of the present invention, and Figure 2 is a cut-away perspective view of an electric component compartment of the bread maker in Figure 1. As shown in Figures 1 and 2, the bread maker, according to an embodiment of the present invention, includes a main body 1 divided into an oven compartment 10 and an electric component compartment 20, a door 3 in the front of the main body 1 to open and close a front opening of the oven compartment 10, and a control panel 5 in the front of the main body 1 to allow a user to control the bread maker and to know the status of the bread maker.

A cancel button 5a is included in the control panel 5 which a user may engage to cancel bread making. When the user presses the cancel button 5a, the cancel button 5a generates a bread-making cancel signal.

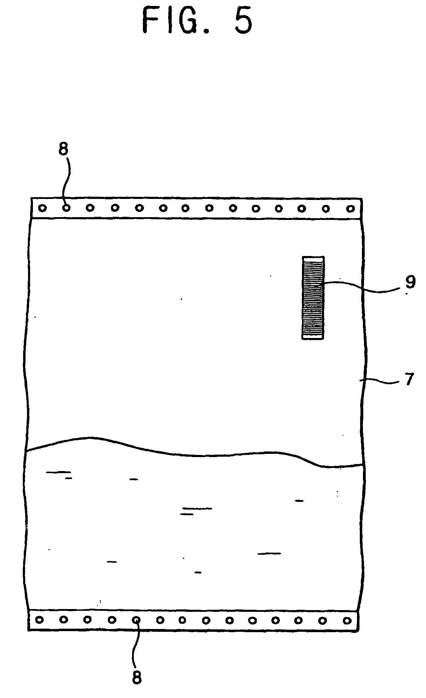

Inside the oven compartment 10, upper and lower kneading drums 11 and 13 are provided in parallel and reciprocally rotate, onto which opposite ends of a mixing bag 7 (Figure 5) filled with raw materials (ingredients) to make bread are attached and wound. In a lower part of the oven compartment 10, a baking tray 15, which contains the dough for baking, is provided between the upper and lower kneading drums 11 and 13.

The baking tray 15 includes first and second trays 15a and 15b having "L"-shaped cross sections symmetrical to one another. The first and second trays 15a and 15b combine to form a box having a top opening. In an upper part of the oven compartment 10, a pair of squeezing members 17 between the upper kneading drum 11 and the baking tray 15 prevents the dough kneaded in the mixing bag 7 from moving beyond the baking tray 15 toward the upper kneading drum 11.

At upper and lower parts of the inside walls of the oven compartment 10 and the door 3, heaters 19 to heat the inside of the oven compartment 10 are provided.

The electric component compartment 20 includes a first component compartment 21 beside the oven compartment 10 and a second component compartment 23 behind the oven compartment 10. Inside the first component compartment 21 a drum driving part 25 to rotate the upper and lower kneading drums 11 and 13 in clockwise and counterclockwise directions. Inside the second component compartment 23, a bar code scanner 29 that reads a bar code 9 printed on, or applied to, the mixing bag 7, which is wound on the upper and lower kneading drums 11 and 13, is provided.

The mixing bag 7 contains raw materials for the bread making, for example, wheat flour, sugar, and so on, in a flexible and tightly sealed bag thereof. The bar code 9, which contains information on kneading time, leavening time, leavening temperature, baking time, baking temperature, evaporation, etc., is attached to one side of the mixing bag.

The drum driving part 25 includes a motor 26 rotating the lower kneading drum 13, and a belt 27 transmitting a rotary movement of the lower kneading drum 13 to a rotation shaft 28 of the upper kneading drum 11. The bar code scanner 29 is able to move near to, and distantly from, an outer circumference of the upper kneading drum 11.

The bread maker according to an embodiment of the present invention comprises a rotation sensing part 40 detecting one or more rotation positions of at least one of a pair of kneading drums 11 and 13, and a controller 70 (to be described later) which controls the drum driving part 25 so that the mixing bag is removed from a holding part of the lower kneading drum 13 on the basis of rotation position signals of the pair of kneading drums 11 and 13, detected by the rotation sensing part 40, as well as cancel information of the bread making process generated through the cancel button 5a.

The rotation sensing part 40 includes a disk part 41 attached to the rotation shaft 28 of the upper kneading drum 11, and a rotation sensor 61 placed near the disk part 41, which outputs a pulse signal by sensing the rotation of the disk part 41.

The disk part 41 includes a first disk 36 that allows the rotation sensor 61 to sense one revolution of the upper kneading drum 11, and a second disk 37 that allows the rotation sensor 61 to sense a rotation less than one revolution of the upper kneading drum 11.

The first and second disk 36 and 37 have a circular shape, in which the first disk 36 has one detecting projection and the second disk 37 has twenty four detecting projections respectively in circumstance thereof.

It is understood that the rotation sensing part 40 may also comprise a single rotation disc as a circular shaped member and having convex sections and concave sections in the circumference, and a rotation signal sensor having a radiating part and a signal sensing part provided in parallel with the rotation disc interposed therebetween.

The rotation sensor 61 includes a first disk sensor 63 sensing the projection of the first disk 36 and outputting one pulse signal per revolution of the upper kneading drum 11. The rotation sensor 61 also includes a second disk sensor 65 sensing the twenty-four projections of the second disk 37 and outputting twenty-four pulse signals per revolution of the upper kneading drum 11. That is, when the upper kneading drum 11 makes one revolution, the first and second disk sensors 63 and 65 output one and twenty-four pulse signals, respectively.

The pulse signals outputted from the first and second disk sensor 63 and 65 of the rotation sensor 61 are transmitted to the controller 70. The controller 70 detects the rotation position of the upper kneading drum 11 on the basis of the pulse signal outputted therefrom and controls the motor 26 of the drum driving part 25 rotating the upper and lower kneading drums 11 and 13 during kneading, to thereby accurately control a distance between upper and lower positions of the mixing bag 7.

For example, the controller 70 rotates the motor 26 clockwise to move the mixing bag 7 upwards until the controller 70 receives the pulse signal detected by the second disk sensor 65 ten times, the controller 70 receives the pulse signal detected by the first disk sensor 63 three times, and the controller 70 receives the pulse signal detected by the second disk sensor 65 ten times. The controller 70 then rotates the motor 26 counterclockwise to move the mixing bag 7 downwards until the controller 70 receives the pulse signal detected by the second disk sensor 65 ten times, the controller 70 receives the pulse signal detected by the first disk sensor 63 three times, and the controller 70 receives the pulse signal detected by the second disk sensor 65 ten times. In such a period, the controller 70 rotates the motor 26 clockwise and counterclockwise during a predetermined time set up in a bar code to move the mixing bag upwards and downwards, thereby controlling raw materials (ingredients) in the mixing bag 7 to be kneaded.

It is understood that there are many known ways to sense entire and/or partial rotations of shafts such as the rotation shafts discussed above. Thus, the above description is not intended to limit the invention disclosed herein.

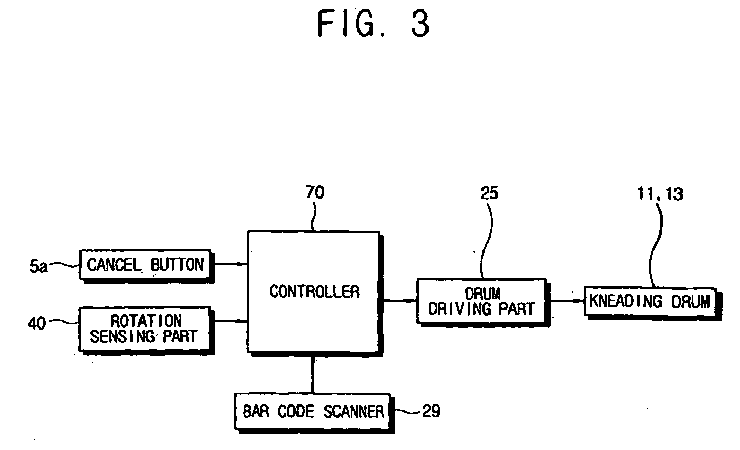

Figure 3 is a block diagram of the bread maker in Figure 1 according to an embodiment of the invention. As shown in Figure 3, the bread maker according to the embodiment of the present invention comprises a cancel button 5a through which a user cancels the bread making process, a rotation sensing part 40 detecting one or more rotation positions of at least one of a pair of kneading drums 11 and 13, and the controller 70 to control the rotation positions of the pair of kneading drums 11 and 13 on the basis of the rotation position thereof detected by the rotation sensing part 40 and cancel signal of the bread making process generated through the cancel button 5a.

According to this embodiment of the present invention, the controller 70 removes bread-making information, which is previously set up therein on the basis of bar code information read by the bar code scanner 29, from a memory when a cancel signal is generated during bread making, and controls the motor 26 to rotate the upper and lower kneading drums 11 and 13 so that the mixing bag 7 may be removed from the holding part of the lower kneading drum 13 on the basis of a rotation position detected by the rotation sensing part 40.

The controller 70 may control the motor 26 to rotate the upper and lower kneading drums 11 and 13 in a reverse direction relative to a rotation direction described above so that the mixing bag 7 can be unwound from the upper kneading drum 11.

The controller 70 controls a rotation angle and a number of rotation times of the upper and lower kneading drums 11 and 13 through the first and the second disk sensors 63 and 65.

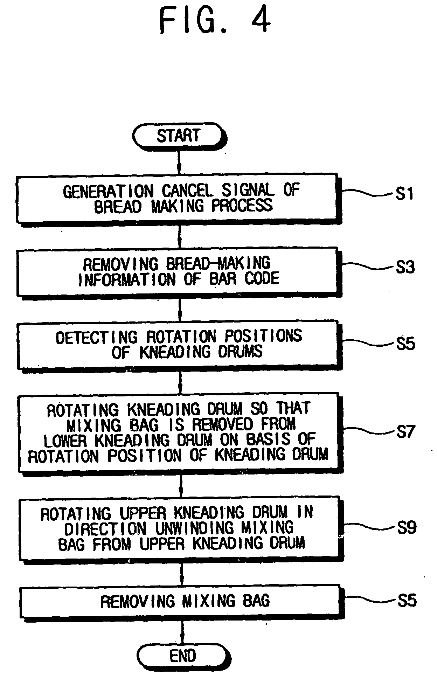

Figure 4 is a control flowchart of the bread maker according to this embodiment of the present invention. As shown in Figure 4, if a user selects cancel of the bread making to generate a cancel signal of the bread making (100), the controller 70 receives the cancel signal of the bread making, and then removes the bread-making information stored therein on the basis of the bar code 9 attached on the mixing bag 7 from the memory thereof and ends the bread making accordingly (300). The controller 70 rotates the upper and lower kneading drums 11 and 13 on the basis of the rotation position of the upper and lower kneading drums 11 and 13, which is detected when a user cancels the bread making by using the cancel button 5a (500), so that the mixing bag 7 is removed from the lower kneading drum 13 (700).

For example, when the bread making is cancelled in a state in which the mixing bag 7 is wound in the upper kneading drum 11 by three turns, that is, in a state in which the mixing bag 7 is wound to the utmost in the upper kneading drum 11 during a kneading process, the mixing bag 7 is controlled to be removed from the lower kneading drum 13 by rotating the upper kneading drum 11 halfway through 1 more turn in a winding direction of the mixing bag 7 on the upper kneading drum 11. This winding may be performed without respect to whether the mixing bag 7 is wound in the lower kneading drum 13.

Also, when the bread making is cancelled during the kneading process, the kneading drums 11 and 13 rotate to a state in which the mixing bag 7 is wound into the upper kneading drum 11 to the utmost during the kneading process on the basis of the detected rotation position, and then the mixing bag is controlled to be removed from the lower kneading drum 13 by rotating the upper kneading drum 11 halfway through 1 more turn in a winding direction of the mixing bag on the upper kneading drum 11.

Further, once the kneading process is completed, a vacant mixing bag 7 is removed from the upper mixing drum 11 and completely wound on the lower kneading drum 13, the lower kneading drum 13 is rotated and accordingly the vacant mixing bag 7 is unwound to be removed from the lower kneading drum 13.

When the bread making is cancelled while the mixing bag 7 is wound on the lower kneading drum 13 as the completely mixed raw material is discharged to the baking tray 15, the mixing bag may not unwind from the lower kneading drum 13 until the mixing bag is completely wound in advance on the lower kneading drum 13.

When the mixing bag is removed from the lower kneading drum 13, the upper kneading drum 11 rotates in an unwinding direction, thereby unwinding the mixing bag 7 from the upper kneading drum 11 (900).

Herein, the upper kneading drum 11 is controlled to rotate to a position in which the mixing bag is held first, so that a user may easily remove the mixing bag from the upper kneading drum 11 (1100).

According to the above embodiment of the present invention, the mixing process in which the kneading drums and the rotation sensing part operate is described, but the bread making operations (for example, kneading, leavening, baking, etc.), which are in progress and are stored in the controller may be confirmed.

With the above configuration, when the bread making is cancelled, the mixing bag 7 is removed from the lower kneading drum 11 and then the upper kneading drum 13 rotates in a direction unwinding the mixing bag, so that a user can easily remove the mixing bag therefrom.

As described above, according to a preferred embodiment of the present invention, there is provided a bread maker, in which a user can easily remove the mixing bag when the bread making process is cancelled.

Although a few embodiments of the present invention have been shown and described, it will be appreciated by those skilled in the art that changes may be made in these embodiments without departing from the principles of the invention, the scope of which is defined in the appended claims.

## Claims

1. A bread maker, comprising:
a main body (1) forming an oven compartment (10);
upper and lower kneading drums (11, 13) spaced apart from each other inside the oven compartment (10), each kneading drum (11, 13) having a holding part for holding opposite ends of a mixing bag (7) filled with dough;
a drum driving part (25) suitable to rotate the kneading drums (11, 13) in clockwise and counterclockwise directions to knead the dough contained in the mixing bag (7); **characterized by**:
a cancel button (5a) suitable to select a cancellation of a bread making process;
a rotation sensing part (40) suitable to sense rotation positions of the upper and lower kneading drums (11, 13); and
a controller (70) suitable to control the drum driving part (25) to unwind the mixing bag (7) from the upper and lower kneading drums (11, 13) based upon rotation position signals generated by the rotation sensing part (40) and cancellation signals from the cancel button (5a).

2. The bread maker according to claim 1, wherein the controller (70) is suitable to control number of rotation times of the upper and lower kneading drums (11, 13) based on the rotation position sensed by the rotation sensing part (40).

3. The bread maker according to claim 2, wherein the controller (70) is suitable to control the drum driving part (25) so that the upper kneading drum (11) is rotated opposite to a wound direction of the mixing bag (7) on the upper kneading drum (11) after the mixing bag (7) is removed from the lower kneading drum (13).

4. The bread maker according to claim 3, wherein the controller (70) is suitable to control the number of rotation times of the kneading drums (11, 13) so that the upper kneading drum (11) is rotated to a position in which the mixing bag (7) was first held.

5. The bread maker according to any preceding claim, further comprising a bar code scanner (29) suitable to read a bar code (9) which is stored with bread making information and which is attached on the mixing bag (7), wherein the bread making information is read by the bar code scanner (29) and stored in a memory.

6. A method of controlling a bread maker having an oven compartment (10), upper and lower kneading drums (11, 13) spaced apart from each other inside the oven compartment (10) with each kneading drum (11, 13) having a holding part for holding opposite ends of a mixing bag (7) filled with dough, and a drum driving part (25) rotating the kneading drums (11, 13) to knead the dough contained in the mixing bag (7), the method comprising:
detecting rotation positions of the kneading drums (11, 13) when the bread making process is canceled;
rotating the kneading drums (11, 13) so that the mixing bag (7) is removed from the holding part of the lower kneading drum (13) based on the detected rotation positions of the kneading drums (11, 13) and the cancellation of the bread making process.

7. The method according to claim 6, further comprising rotating the upper kneading drum (11) opposite to a wound direction of the mixing bag (7) on the upper kneading drum (11) after the mixing bag (7) is removed from the lower kneading drum (13).

8. The method according to claim 7, wherein the rotating the upper kneading drum (11) comprises controlling number of rotation times of the kneading drums (11, 13) so that the upper kneading drum (11) is rotated to a position in which the mixing bag (7) was first held.

9. The method according to any one of claims 6-8, further comprising:
providing a bar code scanner for reading a bar code (9) which is stored with bread making information and which is attached on the mixing bag (7); and
storing the bread making information, which is read by the bar code scanner (29), in a memory.

10. The method according to claim 9, wherein the bar code scanner (29) moves toward and distantly from an outer circumference of the upper kneading drum (11).

11. The method according to claim 10, further comprising:
a rotation sensing part (40) detecting a rotation position signal of the upper kneading drum (11); and
a timer measuring a time interval during which the primary power supply is interrupted.

12. The method according to claim 11, wherein a controller (70) controls a drum driving part (25) rotating the lower kneading drum (13) based upon the rotation position signals generated by a rotation sensing part (40) and the cancellation signal generated by the cancel button (5a).

13. The method according to claim 12, wherein the rotation sensing part (25) comprises:
a disk part (41) attached to at least one of the rotation shafts (28) rotating with the upper kneading drum (11) ; and
a rotation sensor (61), near the disk part (41), outputting a pulse signal having sensed the rotation of the upper kneading drum (11).

14. The method according to claim 13, wherein the disk part (41) includes a first disk (36) having one detecting projection sensing one revolution of the upper kneading drum (11), and a second disk (37) having a plurality of detecting projections sensing less than one rotation of the upper kneading drum (11); and
the rotation sensor (61) includes a first disk sensor (63) sensing the projection of the first disk (36) and outputting one pulse signal per revolution of the upper kneading drum (11), and a second disk sensor (65) sensing the plurality of projections of the second disk (37) and outputting a number of pulse signals in accordance with a number of the plurality of projections per revolution of the upper kneading drum (11).

15. The method according to claim 14, wherein the pulse signals from the first and second disk sensors (63, 65) are transmitted to the controller (70) which detects the rotation position of the upper kneading drum (11).

16. The method according to claim 6, wherein following a cancellation of a bread making process, the method comprising:
generating a cancel signal of the bread making process;
rotating the upper kneading drum (11) in a first direction such that the mixing bag (7) is removed from the lower kneading drum (13) based upon the detected rotating positions; and
rotating the upper kneading drum (11) in a second direction; and
removing the mixing bag (7) from the bread maker.

## Patentansprüche

1. Brotbackmaschine, umfassend:
ein Hauptgehäuse (1), das ein Ofenfach (10) bildet;
obere und untere Knetwalzen (11, 13), die im Inneren des Ofenfachs (10) im Abstand voneinander angeordnet sind, wobei jede Knetwalze (11, 13) ein Halteteil zum Festhalten von gegenüber liegenden Enden eines mit Teig gefüllten Mischbeutels (7) aufweist;
ein Walzenantriebsteil (26), das geeignet ist zum Drehen der Knetwalzen (11, 13) im Uhrzeigersinn und gegen den Uhrzeigersinn, um den im Mischbeutel (7) enthaltenen Teig zu kneten;
**gekennzeichnet durch**:
eine Löschtaste (5a), die geeignet ist, die Rücknahme eines Brotbackvorgangs zu wählen;
ein Umdrehungsfühlteil (40), das geeignet ist, Drehstellungen der oberen und unteren Knetwalzen (11, 13) zu erfassen; und
einen Regler (70), der geeignet ist, das Walzenantriebsteil (25) zu steuern, um den Mischbeutel (7) von der oberen und der unteren Knetwalze (11, 13) auf der Basis von Drehstellungssignalen, die **durch** das Umdrehungsfühlteil (40) erzeugt werden, und Rücknahmesignalen von der Löschtaste (5a) abzuwickeln.

2. Brotbackmaschine nach Anspruch 1, bei der der Regler (70) geeignet ist, mehrmalige Umdrehungen der oberen und der unteren Knetwalze (11, 13) basierend auf der durch das Umdrehungsfühlteil (40) erfassten Drehstellung zu steuern.

3. Brotbackmaschine nach Anspruch 2, bei der der Regler (70) geeignet ist, das Walzenantriebsteil (26) zu steuern, so dass die obere Knetwalze (11) entgegengesetzt zu einer Wickelrichtung des Mischbeutels (7) auf die obere Knetwalze (11) gedreht wird, nachdem der Mischbeutel (7) von der unteren Knetwalze (13) entnommen ist.

4. Brotbackmaschine nach Anspruch 3, bei welcher der Regler (70) geeignet ist, die mehrmaligen Umdrehungen der Knetwalzen (11, 13) zu steuern, so dass die obere Knetwalze (11) in eine Stellung gedreht wird, in der der Mischbeutel (7) zuerst festgehalten wurde.

5. Brotbackmaschine nach einem vorhergehenden Anspruch, die des Weiteren einen Strichcodeleser (29) umfasst, der geeignet ist, einen Strichcode (9) zu lesen, in dem Brotbackinformationen gespeichert sind, und der an dem Mischbeutel (7) befestigt ist, wobei die Brotbackinformationen durch den Strichcodeleser (29) gelesen und in einem Speicher gespeichert werden.

6. Verfahren zum Steuern einer Brotbackmaschine mit einem Ofenfach (10), oberen und unteren Knetwalzen (11, 13), die im Inneren des Ofenfachs (10) voneinander beabstandet sind, wobei jede Knetwalze (11, 13) ein Haltetell zum Festhalten von gegenüber liegenden Enden eines mit Teig gefüllten Mischbeutels (7) aufweist, und einem Walzenantriebsteil (25), das die Knetwalzen (11, 13) zum Kneten des in dem Mischbeutel (7) enthaltenen Teigs rotiert, wobei des Verfahren umfasst:
Detektieren von Drehstellungen der Knetwalzen (11, 13), wenn der Brotbackvorgang zurückgenommen wurde;
Drehen der Knetwalzen (11, 13), so dass der Mischbeutel (7) aus dem Halteteil der unteren Knetwalze (13) basierend auf den detektierten Drehstellungen der Knetwalzen (11, 13) und der Rücknahme des Brotbackvorgangs entnommen wird.

7. Verfahren nach Anspruch 6, des Weiteren umfassend das Drehen der oberen Knetwalze (11) entgegen gesetzt einer Wickelrichtung des Mischbeutels (7) auf der oberen Knetwalze (11), nachdem der Mischbeutel (7) aus der unteren Knetwalze (13) entnommen ist.

8. Verfahren nach Anspruch 7, bel dem das Drehen der oberen Knetwalze (11) das Steuern mehrmaliger Umdrehungen der Knetwalzen (11, 13) umfasst, so dass die obere Knetwalze (11) in eine Stellung gedreht wird, in der der Mischbeutel (7) zuerst festgehalten wurde.

9. Verfahren nach einem der Ansprüche 6 - 8, das des Weiteren umfasst:
Bereitstellen eines Strichcodelesers zum Lesen eines Strichcodes (9), in dem Brotbackinformationen gespeichert sind, und der an dem Mischbeutel (7) befestigt ist; und
Speichern der Brotbackinformationen, die durch den Strichcodeleser (29) gelesen werden, in einem Speicher.

10. Verfahren nach Anspruch 9, bei dem sich der Strichcodeleser (29) zu einem Außenumfang der oberen Knetwalze (11) hin und von diesem weg bewegt.

11. Verfahren nach Anspruch 10, das des Weiteren umfasst:
ein Umdrehungsfühlteil (40), das ein Drehstellungssignal der oberen Knetwalze (11) detektiert; und
einen Zeitgeber, der einen zeitlichen Abstand misst, während dem die primäre Stromversorgung unterbrochen ist.

12. Verfahren nach Anspruch 11, bei dem ein Regler (70) ein Walzenantriebsteil (25) steuert, das die untere Knetwalze (13) auf der Basis der durch ein Umdrehungsfühlteil (40) erzeugten Drehstellungssignale und des durch die Löschtaste (5a) erzeugten Rücknahmesignals dreht.

13. Verfahren nach Anspruch 12, bei dem das Umdrehungsfühlteil (25) umfasst:
ein Scheibenteil (41), das zumindest an einer der die obere Knetwalze (11) rotierenden Drehwellen (28) befestigt ist; und
einen ein Impulssignal ausgebenden Rotationssensor (61) in der Nähe des Scheibenteils (41), der die Drehung der oberen Knetwalze (11) erfasst hat.

14. Verfahren nach Anspruch 13, bei dem das Scheibenteil (41) eine erste Scheibe (36) mit einem Detektionsvorsprung, der eine Umdrehung der oberen Knetwalze (11) fühlt, und eine zweite Scheibe (37) mit einer Vielzahl von Detektionsvorsprüngen umfasst, die weniger als eine Umdrehung der oberen Knetwatze (11) fühlen; und
der Rotationssensor (61) einen ersten Scheibensensor (63), der den Vorsprung der ersten Scheibe (36) fühlt und ein Impulssignal pro Umdrehung der oberen Knetwalze (11) ausgibt, und einen zweiten Schelbensensor (65) enthält, der die Vielzahl von Vorsprüngen der zweiten Scheibe (37) fühlt und entsprechend einer Anzahl der zahlreichen Vorsprünge pro Umdrehung der oberen Knetwalze (11) eine Anzahl von Impulssignalen ausgibt.

15. Verfahren nach Anspruch 14, bei dem die Impulssignale von den ersten und den zweiten Scheibensensoren (63, 65) zu dem Regler (70), der die Drehstellung der oberen Knetwalze (11) detektiert, übertragen werden.

16. Verfahren nach Anspruch 6, bei dem nach einer Rücknahme des Brotbackvorgangs das Verfahren umfasst:
Erzeugen eines Rücknahmesignals des Brotbackvorgangs;
Drehen der oberen Knetwalze (11) in eine erste Richtung auf der Basis der detektierten Drehstellungen, so dass der Mischbeutel (7) aus der unteren Knetwalze (13) entfernt ist; und
Drehen der oberen Knetwalze (11) in eine zweite Richtung; und
Entnehmen des Mischbeutels (7) aus der Brotbackmaschine.

## Revendications

1. Machine à faire du pain comprenant :
- un corps principal (1) formant un compartiment four (10) ;
- des tambours de malaxage supérieur et inférieur (11, 13) espacés l'un de l'autre à l'intérieur du compartiment four (10), chaque tambour de malaxage (11, 13) comprenant une partie de maintien permettant de tenir les extrémités opposées d'un sac de mélange (7) rempli de pâte ;
- une partie d'entraînement de tambour (25) permettant d'entraîner en rotation les tambours de malaxage (11, 13) dans la sens des aiguilles d'une montre et dans le sens inverse des aiguilles d'une montre afin de malaxer la pâte contenue dans le sac de mélange (7) ;
**caractérisé par** :
- un bouton d'annulation (5a) permettant de sélectionner une annulation du processus de fabrication du pain ;
- une pièce de détection de rotation (40) permettant de détecter les positions de rotation des tambours de malaxage supérieur et inférieur (11, 13) ; et
- une unité de commande (70) permettant de commander la partie d'entraînement de tambour (25) afin de dérouler le sac de mélange (7) depuis les tambours de malaxage supérieur et inférieur (11, 13) en fonction des signaux de position de rotation générés par la pièce de détection de rotation (40) et des signaux d'annulation provenant du bouton d'annulation (5a).

2. Machine à faire du pain selon la revendication 1, dans laquelle l'unité de commande (70) permet de commander le nombre de rotations des tambours de malaxage supérieur et inférieur (11, 13) en fonction de la position de rotation détectée par la pièce de détection de rotation (40).

3. Machine à faire du pain selon la revendication 2, dans laquelle l'unité de commande (70) permet de commander la partie d'entraînement de tambour (25) de sorte que le tambour de malaxage supérieur (11) tourne dans une direction opposée à la direction d'enroulement du sac de mélange (7) sur le tambour de malaxage supérieur (11) une fois que le sac de mélange (7) est retiré du tambour de malaxage inférieur (13).

4. Machine à faire du pain selon la revendication 3, dans laquelle l'unité de commande (70) permet de commander le nombre de rotations des tambours de malaxage (11, 13) de sorte que le tambour de malaxage supérieur (11) tourne jusqu'à une position dans laquelle le sac de mélange (7) était maintenu au départ.

5. Machine à faire du pain selon l'une quelconque des revendications précédentes, comprenant en outre un lecteur de code à barres (29) permettant de lire un code à barres (9) qui comporte des informations sur la fabrication du pain et qui est fixé sur le sac de mélange (7), lesquelles informations sur la fabrication du pain sont lues par le lecteur de code à barres (29) et stockées dans une mémoire.

6. Procédé de commande d'une machine à faire du pain comportant un compartiment four (10), des tambours de malaxage supérieur et inférieur (11, 13) espacés l'un de l'autre à l'intérieur du compartiment four (10) et chaque tambour de malaxage (11, 13) comprenant une partie de maintien permettant de tenir les extrémités opposées d'un sac de mélange (7) rempli de pâte, et une partie d'entraînement de tambour (25) permettant d'entrainer en rotation les tambours de malaxage (11, 13) afin de malaxer la pâte contenue dans le sac de mélange (7), lequel procédé consiste à :
- détecter les positions de rotation des tambours de malaxage (11, 13) lorsque le processus de fabrication du pain est annulé ; et
- faire tourner les tambours de malaxage (11, 13) de sorte que le sac de mélange (7) soit retiré de la partie de maintien du tambour de malaxage inférieur (13) en fonction des positions de rotation détectées des tambours de malaxages (11, 13) et de l'annulation du processus de fabrication de pain.

7. Procédé selon la revendication 6, consistant en outre à faire tourner le tambour de malaxage supérieur (11) dans une direction opposée à la direction d'enroulement du sac de mélange (7) sur le tambour de malaxage supérieur (11) une fois que le sac de mélange (7) est retiré du tambour de malaxage inférieur (13).

8. Procédé selon la revendication 7, dans lequel la rotation du tambour de malaxage supérieur (11) comprend un contrôle du nombre de rotation des tambours de malaxage (11, 13) de sorte que le tambour de malaxage supérieur (11) tourne jusqu'à une position dans laquelle le sac de mélange (7) était maintenu au départ.

9. Procédé selon l'une quelconque des revendications 6 à 8, consistant en outre à :
- utiliser un lecteur de code à barres afin de lire un code à barres (9) qui comporte des informations sur la fabrication du pain et qui est fixé sur le sac de mélange (7) ; et
- stocker dans une mémoire les informations sur la fabrication du pain qui sont lues par le lecteur de code à barres (29).

10. Procédé selon la revendication 9, dans lequel le lecteur de code à barres (29) se déplace vers la circonférence externe du tambour de malaxage supérieur (11) et à distance de celle-ci.

11. Procédé selon la revendication 10, comprenant en outre :
- une pièce de détection de rotation (40) permettant de détecter un signal de position de rotation du tambour de malaxage supérieur (11) ; et
- un minuteur mesurant un intervalle de temps pendant lequel l'alimentation électrique primaire est interrompue.

12. Procédé selon la revendication 11, dans lequel l'unité de commande (70) commande une partie d'entraînement de tambour (25) faisant tourner le tambour de malaxage inférieur (13) en fonction des signaux de position de rotation générés par la pièce de détection de rotation (40) et du signal d'annulation généré par le bouton d'annulation (5a).

13. Procédé selon la revendication 12, dans lequel la pièce de détection de rotation (40) comprend :
- une partie disque (41) attachée à au moins un des arbres de rotation (28) tournant avec le tambour de malaxage supérieur (11) ; et
- un capteur de rotation (61) situé à proximité de la partie disque (41) et émettant un signal d'impulsion après avoir détecté la rotation du tambour de malaxage supérieur (11).

14. Procédé selon la revendication 13, dans lequel la partie disque (41) comprend un premier disque (36) comportant une protubérance de détection détectant une révolution du tambour de malaxage supérieur (11) ainsi qu'un second disque (37) comportant plusieurs protubérances de détection détectant moins d'une rotation du tambour de malaxage supérieur (11), et dans lequel
le capteur de rotation (61) comprend un premier capteur de disque (63) détectant la protubérance du premier disque (36) et émettant un signal d'impulsion par révolution du tambour de malaxage supérieur (11), ainsi qu'un second capteur de disque (65) détectant lesdites plusieurs protubérances du second disque (37) et émettant un certain nombre de signaux d'impulsion correspondant au nombre de multiples protubérances par révolution du tambour de malaxage supérieur (11).

15. Procédé selon la revendication 14, dans lequel les signaux d'impulsion provenant des premier et second capteurs de disque (63, 65) sont transmis à l'unité de commande (70) qui détecte la position de rotation du tambour de malaxage supérieur (11).

16. Procédé selon la revendication 6, lequel, suite à une annulation du processus de fabrication de pain, consiste à :
- générer un signal d'annulation du processus de fabrication de pain ;
- faire tourner le tambour de malaxage supérieur (11) dans une première direction de sorte que le sec de mélange (7) soit retiré du tambour de malaxage inférieur (13) en fonction des positions de rotation détectées ; et
- faire tourner le tambour de malaxage supérieur (11) dans une seconde direction ; puis
- retirer le sac de mélange (7) de la machine à faire du pain.
